# EUROPEAN PATENT APPLICATION

(11) **EP 4 818 761 A1**
(43) Date of publication of application: **07.10.2026**
(21) Application number: 24895921.5
(22) Date of filing: 19.09.2024
(51) Int. Cl.: G01T 7/00, G21C 17/00

(54) **FAULT DETECTION METHOD AND APPARATUS FOR DETECTOR, AND COMPUTER DEVICE AND STORAGE MEDIUM**

(30) Priority: 29.11.2023 CN 202311614921
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: HU, Yisong, Shenzhen, Guangdong 518031 (CN); LI, Kejia, Shenzhen, Guangdong 518031 (CN); ZHANG, Wei, Shenzhen, Guangdong 518031 (CN); LU, Xianghui, Shenzhen, Guangdong 518031 (CN); HU, Yousen, Shenzhen, Guangdong 518031 (CN); CAO, Jianhua, Shenzhen, Guangdong 518031 (CN); WANG, Weiru, Shenzhen, Guangdong 518031 (CN); FENG, Yingjie, Shenzhen, Guangdong 518031 (CN); CHEN, Tianming, Shenzhen, Guangdong 518031 (CN); MENG, Shuqi, Shenzhen, Guangdong 518031 (CN); MAO, Yulong, Shenzhen, Guangdong 518031 (CN)
(74) Representative: Zacco Sweden AB
(86) International application number: PCT/CN2024/119616
(87) International publication number: WO 2025/112823

(57) **Abstract**

The present application relates to a fault detection method and apparatus for detectors, a computer device, and a storage medium. The method includes: determining, based on a feedback signal of each detector at a corresponding measurement point, a hardware state corresponding to each detector, and determining a detector whose hardware state does not satisfy a first preset range condition to be in a first failure state; wherein the hardware state represents a status of a hardware interface of the detector (step S102); determining, based on an electrical signal of each detector at the corresponding measurement point, a circuit state corresponding to each detector, taking a detector whose circuit state does not satisfy a second preset range condition as a candidate detector, obtaining a verification result corresponding to the candidate detector, and when it is determined based on the verification result that the circuit state of the candidate detector does not satisfy the second preset range condition, determining the candidate detector to be in a second failure state; wherein the circuit state represents an operating status of an electronic circuit of the detector (step S104); and recording a number of detectors in a target failure state, and triggering a reactor trip signal when the number of detectors in the target failure state is greater than a preset threshold; wherein the target failure state includes at least one of the first failure state or the second failure state (step S106).

## Description

### COMPUTER DEVICE, AND STORAGE MEDIUM

This application claims priority to Chinese Patent Application No. 202311614921.2, entitled "FAULT DETECTION METHOD AND APPARATUS FOR DETECTOR, COMPUTER DEVICE, AND STORAGE MEDIUM" and filed with the China National Intellectual Property Administration on November 29, 2023, the entire contents of which are incorporated herein by reference.

### TECHNICAL FIELD

The present application relates to the field of nuclear power information technology, and in particular, to a fault detection method and apparatus for detectors, a computer device, and a storage medium.

### BACKGROUND

In the field of nuclear power, a neutron flux density is a key physical quantity for monitoring and controlling an operating status of a nuclear reactor. To ensure normal operation of the nuclear reactor, the neutron flux inside the nuclear reactor core is typically monitored by using a neutron detector.

However, due to the lack of a comprehensive fault diagnosis method, it is difficult to efficiently and accurately detect faults in the neutron detector, thereby affecting reliability of a detection result of the neutron detector and stability of the operating status of the nuclear reactor.

### SUMMARY

Embodiments of the present application provide a fault detection method and apparatus for detectors, a computer device, and a storage medium.

In a first aspect, the present application provides a fault detection method for detectors, performed by a computer device, the method including:
determining, based on a feedback signal of each detector at a corresponding measurement point, a hardware state corresponding to each detector, and determining a detector whose hardware state does not satisfy a first preset range condition to be in a first failure state; wherein the hardware state represents a status of a hardware interface of the detector;
determining, based on an electrical signal of each detector at the corresponding measurement point, a circuit state corresponding to each detector, taking a detector whose circuit state does not satisfy a second preset range condition as a candidate detector, obtaining a verification result corresponding to the candidate detector, and when it is determined based on the verification result that the circuit state of the candidate detector does not satisfy the second preset range condition, determining the candidate detector to be in a second failure state; wherein the circuit state represents an operating status of an electronic circuit of the detector; and
recording a number of detectors in a target failure state, and triggering a reactor trip signal when the number of detectors in the target failure state is greater than a preset threshold; wherein the target failure state includes at least one of the first failure state or the second failure state.

In an embodiment, determining, based on the feedback signal of each detector at the corresponding measurement point, the hardware state corresponding to each detector includes: determining the first preset range condition based on a reference signal of the detector, and when the feedback signal of a current detector at the corresponding measurement point does not satisfy the first preset range condition, determining that the hardware state of the current detector does not satisfy the first preset range condition. The reference signal refers to a signal when the detector is in a known normal hardware state.

In an embodiment, determining, based on the electrical signal of each detector at the corresponding measurement point, the circuit state corresponding to each detector includes: determining the second preset range condition based on an operating current range of the detector, and when a current value of a current detector not in the first failure state at the corresponding measurement point does not satisfy the second preset range condition, determining that the circuit state of the current detector does not satisfy the second preset range condition. The operating current range refers to a current range of the detector when the detector is in a known normal circuit state.

In an embodiment, determining, based on the electrical signal of each detector at the corresponding measurement point, the circuit state corresponding to each detector includes: determining the second preset range condition based on a reconstructed core linear power density and the number of detectors currently in the target failure state, and when a linear power density of a current detector at the corresponding measurement point does not satisfy the second preset range condition, determining that the circuit state of the current detector does not satisfy the second preset range condition.

In an embodiment, determining, based on the electrical signal of each detector at the corresponding measurement point, the circuit state corresponding to each detector includes: determining the second preset range condition based on a reconstructed core linear power density and a mean linear power density corresponding to detectors that are currently not in the target failure state, and when a linear power value of a current detector at the corresponding measurement point does not satisfy the second preset range condition, determining that the circuit state of the current detector does not satisfy the second preset range condition.

In an embodiment, determining, based on the electrical signal of each detector at the corresponding measurement point, the circuit state corresponding to each detector includes: determining the second preset range condition based on a power deviation value corresponding to a pair of detectors at centrally symmetric measurement points and not in the first failure state, and when a power value corresponding to a current detector does not satisfy the second preset range condition, determining that the circuit state of the current detector does not satisfy the second preset range condition.

In an embodiment, before obtaining the verification result for the circuit state corresponding to the candidate detector, the method includes: triggering an alarm signal corresponding to the candidate detector, and triggering, based on the alarm signal, the verification result for the circuit state corresponding to the candidate detector.

In a second aspect, the present application further provides a fault detection apparatus for detectors, including:
a first detection module, configured to determine, based on a feedback signal of each detector at a corresponding measurement point, a hardware state corresponding to each detector, and determine a detector whose hardware state does not satisfy a first preset range condition to be in a first failure state; wherein the hardware state represents a status of a hardware interface of the detector;
a second detection module, configured to determine, based on an electrical signal of each detector at the corresponding measurement point, a circuit state corresponding to each detector, take a detector whose circuit state does not satisfy a second preset range condition as a candidate detector, obtain a verification result corresponding to the candidate detector, and when it is determined based on the verification result that the circuit state of the candidate detector does not satisfy the second preset range condition, determine the candidate detector to be in a second failure state; wherein the circuit state represents an operating status of an electronic circuit of the detector; and
an analysis module, configured to record a number of detectors in a target failure state, and trigger a reactor trip signal when the number of detectors in the target failure state is greater than a preset threshold; wherein the target failure state includes at least one of the first failure state or the second failure state.

In an embodiment, the first detection module includes a hardware determination unit. The hardware determination unit is configured to: determine the first preset range condition based on a reference signal of the detector, and when the feedback signal of a current detector at the corresponding measurement point does not satisfy the first preset range condition, determine that the hardware state of the current detector does not satisfy the first preset range condition. The reference signal refers to a signal when the detector is in a known normal hardware state.

In an embodiment, the second detection module includes a first circuit determination unit. The first circuit determination unit is configured to: determine the second preset range condition based on an operating current range of the detector, and when a current value of a current detector not in the first failure state at the corresponding measurement point does not satisfy the second preset range condition, determine that the circuit state of the current detector does not satisfy the second preset range condition. The operating current range refers to a current range of the detector when the detector is in a known normal circuit state.

In an embodiment, the second detection module includes a second circuit determination unit. The second circuit determination unit is configured to: determine the second preset range condition based on a reconstructed core linear power density and the number of detectors currently in the target failure state, and when a linear power density of a current detector at the corresponding measurement point does not satisfy the second preset range condition, determine that the circuit state of the current detector does not satisfy the second preset range condition.

In an embodiment, the second detection module includes a third circuit determination unit. The third circuit determination unit is configured to: determine the second preset range condition based on a reconstructed core linear power density and a mean linear power density corresponding to detectors that are currently not in the target failure state, and when a linear power value of a current detector at the corresponding measurement point does not satisfy the second preset range condition, determine that the circuit state of the current detector does not satisfy the second preset range condition.

In an embodiment, the second detection module includes a fourth circuit determination unit. The fourth circuit determination unit is configured to: determine the second preset range condition based on a power deviation value corresponding to a pair of detectors at centrally symmetric measurement points and not in the first failure state, and when a power value corresponding to a current detector does not satisfy the second preset range condition, determine that the circuit state of the current detector does not satisfy the second preset range condition.

In a third aspect, the present application further provides a computer device, including a memory and a processor. The memory stores computer-readable instructions. The processor, when executing the computer-readable instructions, implements the following steps:
determining, based on a feedback signal of each detector at a corresponding measurement point, a hardware state corresponding to each detector, and determining a detector whose hardware state does not satisfy a first preset range condition to be in a first failure state; wherein the hardware state represents a status of a hardware interface of the detector;
determining, based on an electrical signal of each detector at the corresponding measurement point, a circuit state corresponding to each detector, taking a detector whose circuit state does not satisfy a second preset range condition as a candidate detector, obtaining a verification result corresponding to the candidate detector, and when it is determined based on the verification result that the circuit state of the candidate detector does not satisfy the second preset range condition, determining the candidate detector to be in a second failure state; wherein the circuit state represents an operating status of an electronic circuit of the detector; and recording a number of detectors in a target failure state, and triggering a reactor trip signal when the number of detectors in the target failure state is greater than a preset threshold; wherein the target failure state includes at least one of the first failure state or the second failure state.

In a fourth aspect, the present application further provides a computer-readable storage medium, having computer-readable instructions stored therein. The computer-readable instructions, when executed by a processor, implement the following steps:
determining, based on a feedback signal of each detector at a corresponding measurement point, a hardware state corresponding to each detector, and determining a detector whose hardware state does not satisfy a first preset range condition to be in a first failure state; wherein the hardware state represents a status of a hardware interface of the detector;
determining, based on an electrical signal of each detector at the corresponding measurement point, a circuit state corresponding to each detector, taking a detector whose circuit state does not satisfy a second preset range condition as a candidate detector, obtaining a verification result corresponding to the candidate detector, and when it is determined based on the verification result that the circuit state of the candidate detector does not satisfy the second preset range condition, determining the candidate detector to be in a second failure state; wherein the circuit state represents an operating status of an electronic circuit of the detector; and recording a number of detectors in a target failure state, and triggering a reactor trip signal when the number of detectors in the target failure state is greater than a preset threshold; wherein the target failure state includes at least one of the first failure state or the second failure state.

### BRIEF DESCRIPTION OF THE DRAWINGS

To more clearly illustrate the technical solutions in the embodiments of the present application or the related art, the accompanying drawings required for describing the embodiments of the present application or for describing the related art will be briefly introduced as follows. Apparently, the accompanying drawings in the following description illustrate merely some embodiments of the present application, and for those of ordinary skill in the art, other accompanying drawings can be obtained according to these accompanying drawings without any creative effort.
FIG. 1 is a schematic flowchart of a fault detection method for detectors according to an embodiment.
FIG. 2 is a schematic flowchart of a fault detection method for detectors according to another embodiment.
FIG. 3 is a structural block diagram of a fault detection apparatus for detectors according to an embodiment.
FIG. 4 is a diagram showing an internal structure of a computer device according to an embodiment.

### DETAILED DESCRIPTION

To make the objectives, technical solutions, and advantages of the present application more clearly understood, the present application is further described in detail below with reference to the accompanying drawings and embodiments. It should be understood that specific embodiments described herein are only intended to illustrate the present application and are not intended to limit the present application.

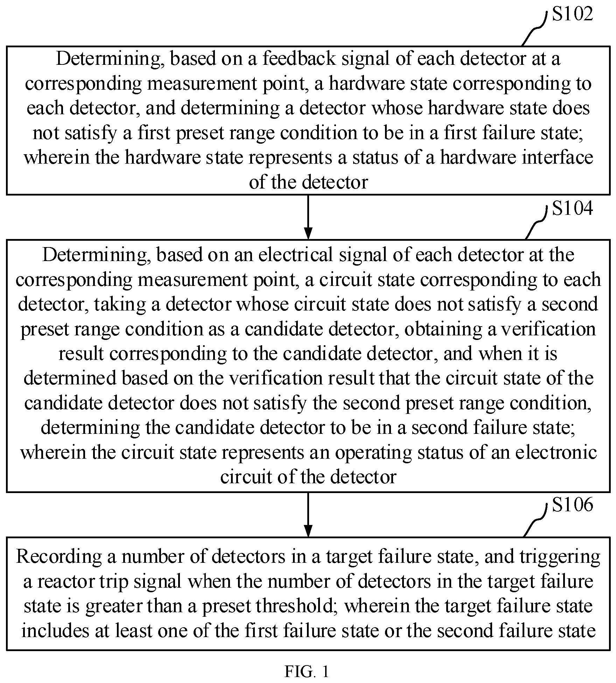

In an embodiment, as shown in FIG. 1, a fault detection method for detectors is provided. This embodiment is described based on an example in which the method is applied to a server. It may be understood that the method may alternatively be applied to a terminal, or may be applied to a system including a terminal and a server and be implemented through interaction between the terminal and the server. In this embodiment, the method includes the following step S102 to step S106.

In the step S102, a hardware state corresponding to each detector is determined based on a feedback signal of each detector at a corresponding measurement point, and a detector whose hardware state does not satisfy a first preset range condition is determined to be in a first failure state. The hardware state represents a status of a hardware interface of the detector.

The detector refers to a neutron detector configured to detect a neutron flux density of a nuclear reactor core, and the detector may include a gas detector, a semiconductor detector, a scintillator detector, and a self-powered neutron detector. Exemplarily, since the self-powered neutron detector has characteristics such as no need for an external bias voltage, a simple structure, a small size, an integral solid construction, and a simple electronic device, the self-powered neutron detector is more advantageous during detection of the neutron flux density. Therefore, this embodiment is described based on an example in which the method is applied to a self-powered neutron detector.

The feedback signal refers to a signal that indicates a state, performance, or a behavior of a hardware device. The feedback signal may represent a signal used to detect and report information about a hardware state and performance of the detector, and may be generated from hardware components of the detector. The hardware state refers to a current performance state of the hardware device. The hardware state may represent a hardware integrity of the detector, i.e., whether the detector has any hardware-level damage, including hardware interface damage, a contact fault, and the like. The hardware interface refers to a physical connection point or an electronic connection point used for connection or communication between two or more hardware devices. The hardware interface may include a power interface used to connect a power supply to the detector, a data interface used to transmit data from the detector, and a control interface used to control an operating status of the detector.

Converting the detector to a failure state means setting an output signal of the detector to zero or to a Non state. The first failure state may represent a state of the corresponding detector when the output signal of the corresponding detector is set to zero due to the hardware state not meeting expectations.

Exemplarily, the server receives the feedback signal from each detector, obtains the hardware state corresponding to each detector, and sets the first preset range condition as an evaluation criterion for the hardware state. When the hardware state corresponding to the current detector does not satisfy the first preset range condition, the current detector is determined to be in the first failure state.

Optionally, the feedback signal may represent a signal indicating whether a fault occurs in the power interface of the detector, correspondingly obtaining the hardware state of the power interface. The feedback signal may alternatively represent a signal indicating whether an error or data loss occurs in the data transmission process through the data interface, correspondingly obtaining the hardware state of the data interface. The feedback signal may alternatively represent a signal indicating whether an abnormality occurs in the process of controlling the operating status of the detector through the control interface, correspondingly obtaining the hardware state of the control interface.

Optionally, the first preset range condition may represent an objective evaluation criterion for the hardware state, which may be characterized as a condition for determining stability of the power supply, correspondingly determining the hardware state of the power interface. The first preset range condition may be characterized as a condition for determining a number or type of errors that occur in the data transmission process, correspondingly determining the hardware state of the data interface. The first preset range condition may alternatively be characterized as a condition for determining an abnormality that occurs when an operating status of the detector is controlled, correspondingly determining the hardware state of the control interface.

In the step S104, a circuit state corresponding to each detector is determined based on an electrical signal of each detector at the corresponding measurement point, a detector whose circuit state does not satisfy a second preset range condition is taken as a candidate detector, a verification result corresponding to the candidate detector is obtained, and when it is determined based on the verification result that the circuit state of the candidate detector does not satisfy the second preset range condition, the candidate detector is determined to be in a second failure state. The circuit state represents an operating status of an electronic circuit of the detector.

The electrical signal refers to a signal transmitted in the form of a voltage, a current, or a charge. The electrical signal may represent a signal detected by the detector at the corresponding measurement point, which reflects information such as a current, a linear power, or a linear power density at the corresponding measurement point. The circuit state refers to an operating status of each component in an electronic circuit and the entire circuit. The circuit state may represent an operating status of the electronic circuit inside the detector, i.e., a state of electronic components, sensors, signal processing circuits, and the like inside the detector.

Converting the detector to a failure state means setting an output signal of the detector to zero. The second failure state may represent a state of the corresponding detector when the output signal of the corresponding detector is set to zero due to the circuit state not meeting expectations.

Exemplarily, the server receives the electrical signal from each detector to obtain the circuit state corresponding to each detector. Meanwhile, the second preset range condition is set as an evaluation criterion for the circuit state. When the circuit state corresponding to the current detector does not meet the second preset range condition, the circuit state corresponding to the current detector is verified and a verification result is obtained. If it is determined based on the verification result that the circuit state of the current detector does not meet the second preset range condition, the current detector is determined to be in the second failure state.

Optionally, the electrical signal may represent current information measured by the detector at the corresponding measurement point, correspondingly obtaining a circuit state that describes the current information. The electrical signal may alternatively represent linear power information measured by the detector at the corresponding measurement point, correspondingly obtaining a circuit state that describes the linear power information.

Optionally, the second preset range condition may represent an objective evaluation criterion for the circuit state, which may be characterized as a condition for determining magnitude and stability of the current, correspondingly determining a circuit state including the current information. The second preset range condition may alternatively be characterized as a condition for determining magnitude and stability of the linear power, correspondingly determining a circuit state including the linear power information.

Optionally, the verification result may be obtained by manual verification, so as to improve accuracy and reliability of the verification result. Furthermore, corresponding computer-readable instructions or algorithms may alternatively be incorporated to achieve an automatic verification function, thereby improving efficiency of verification.

In the step S106, a number of detectors in a target failure state is recorded, and a reactor trip signal is triggered when the number of detectors in the target failure state is greater than a preset threshold. The target failure state includes at least one of the first failure state or the second failure state.

The reactor trip signal refers to a nuclear reaction stop signal of a nuclear reactor.

Exemplarily, the server records the number of detectors in the failure state, and when the number is greater than the preset threshold, the reactor trip signal is triggered to stop nuclear reaction of the nuclear reactor.

Optionally, a type of the failure state of the detector may be recorded, so that during subsequent maintenance, hardware-level maintenance may be performed on detectors in the first failure state and circuit-level maintenance may be performed on detectors in the second failure state in a targeted manner, thereby improving efficiency of maintenance.

Optionally, the first preset range conditions and the second preset range conditions corresponding to different detectors are consistent, thereby providing a unified evaluation standard for hardware states and circuit states of the different detectors.

In the above fault detection method for detectors, by setting a first preset range condition and a second preset range condition, a hardware state and a circuit state of the detector are respectively determined in a targeted and comprehensive manner. Further, a determination result of the circuit state is accurately verified to reduce a possibility of misjudgment, and whether to trigger a reactor trip signal is accurately determined through a preset threshold. Thus, a failure state of each detector is precisely identified, and efficiency and accuracy of detecting and processing faults in the detector are improved, thereby ensuring safe operation of the nuclear reactor.

In an exemplary embodiment, determining, based on the feedback signal of each detector at the corresponding measurement point, the hardware state corresponding to each detector includes step S1021.

In the step S1021, the first preset range condition is determined based on a reference signal of the detector, and when the feedback signal of a current detector at the corresponding measurement point does not satisfy the first preset range condition, it is determined that the hardware state of the current detector does not satisfy the first preset range condition. The reference signal refers to a signal when the detector is in a known normal hardware state.

The reference signal refers to a signal used as a reference or standard during the measurement. The reference signal may represent a signal used to describe a hardware state and performance of the detector in a normal operating status, and may be generated from hardware components of the detector.

Exemplarily, the server obtains the first preset range condition based on the reference signal of the detector, and when the feedback signal of the current detector at the corresponding measurement point does not satisfy the first preset range condition, it is determined that the hardware state of the current detector does not satisfy the first preset range condition.

Optionally, the reference signal may represent a known normal state. The reference signal may be compared with the feedback signal. When the reference signal and the feedback signal are highly matched, the hardware state of the detector is normal. When differences in aspects such as an amplitude, a frequency, and a waveform between the reference signal and the feedback signal is greater than a preset threshold, it indicates that the hardware state of the detector is abnormal.

Optionally, firstly, feature information is extracted from the reference signal, such as a signal amplitude, frequency components, time-domain characteristics, frequency-domain characteristics, and a waveform shape. Secondly, the corresponding feature information is used to build a model to describe signal characteristics of the detector in a normal operating status, such as a statistical model or a machine learning model. Thirdly, according to output and statistical information of the model, criteria for evaluating the feedback signal are determined, such as a threshold, a probability distribution, and an error range.

In this embodiment, a criterion for determining the feedback signal is obtained based on the reference signal, and then a criterion for determining the hardware state is obtained, thereby improving accuracy and efficiency of determining the hardware state of the detector.

In an exemplary embodiment, determining, based on the electrical signal of each detector at the corresponding measurement point, the circuit state corresponding to each detector includes step S1041.

In the step S1041, the second preset range condition is determined based on an operating current range of the detector, and when a current value of a current detector not in the first failure state at the corresponding measurement point does not satisfy the second preset range condition, it is determined that the circuit state of the current detector does not satisfy the second preset range condition; wherein the operating current range refers to a current range of the detector when the detector is in a known normal circuit state.

Exemplarily, the second preset range condition is obtained based on the operating current range of the detector, and the second preset range condition represents an objective evaluation criterion for the circuit state of the detector. For a detector not in the first failure state, if the current value of the detector at the corresponding measurement point does not meet the second preset range condition, it is determined that the circuit state of the detector does not meet the second preset range condition. For a detector in the first failure state, an output signal of the detector is zero, so there is no need to determine whether a current value of the detector meets the second preset range condition.

Optionally, when the operating current range of the detector is 4 to 20 mA, the circuit state corresponding to a detector with a current value lower than 3.7 mA or higher than 20.3 mA is determined to not meet the second preset range condition.

In this embodiment, a criterion for determining the current value is obtained based on the operating current range, and then a criterion for determining the circuit state is obtained, thereby improving accuracy and efficiency of determining the circuit state of the detector.

In an exemplary embodiment, determining, based on the electrical signal of each detector at the corresponding measurement point, the circuit state corresponding to each detector includes step S1042.

In the step S1042, the second preset range condition is determined based on a reconstructed core linear power density and the number of detectors currently in the target failure state, and when a linear power density of a current detector at the corresponding measurement point does not satisfy the second preset range condition, it is determined that the circuit state of the current detector does not satisfy the second preset range condition.

Reconstruction refers to core power reconstruction, which may represent real-time reconstruction of a power distribution of the entire core based on power signals corresponding to current signals measured by the detectors that are currently not in the failure state. The power distribution may represent a distribution of the linear power density.

Exemplarily, according to the number of failed detectors, a reactor trip threshold of the linear power density under the reconstructed core linear power density distribution is determined, which is the second preset range condition. When the linear power density of the detector at the corresponding measurement point is greater than the reactor trip threshold, it is determined that the circuit state of the detector does not meet the second preset range condition.

Optionally, the reconstructed power distribution is a full-core power distribution. Even if the output signal of the detector in the first failure state is zero, the circuit state of the detector may still be determined through the corresponding reconstructed linear power density.

Optionally, there is a correlation between the number of failed detectors and the reactor trip threshold. For example, as the number of failed detectors increases, the reactor trip threshold may be correspondingly lowered to ensure that the reactor can be shut down quickly in the event of a large number of failed detectors, thereby ensuring safety of the reactor.

Further, different reactor trip thresholds correspond to different numbers of detectors in the failure state. Alternatively, different reactor trip thresholds correspond to detectors in the failure state within different number ranges. For example, when the number of failed detectors is in the range of 1 to 5, a corresponding reactor trip threshold of linear power density is 600 W/cm. When the number of failed detectors is in the range of 6 to 10, the corresponding reactor trip threshold of linear power density is lowered to 500 W/cm.

In this embodiment, a criterion for determining the linear power density is obtained based on the reconstructed core linear power density status and the number of failed detectors, and then a criterion for determining the circuit state is obtained, thereby improving accuracy and efficiency of determining the circuit state of the detector.

In an exemplary embodiment, determining, based on the electrical signal of each detector at the corresponding measurement point, the circuit state corresponding to each detector includes step S1043.

In the step S1043, the second preset range condition is determined based on a reconstructed core linear power density and a mean linear power density corresponding to detectors that are currently not in the target failure state, and when a linear power value of a current detector at the corresponding measurement point does not satisfy the second preset range condition, it is determined that the circuit state of the current detector does not satisfy the second preset range condition.

Exemplarily, linear power densities respectively corresponding to the detectors that are currently not in the failure state are obtained, and the linear power densities are summed and averaged to obtain the mean linear power density corresponding to the detectors that are currently not in the failure state. The mean linear power density is taken as a reference value to determine an upper threshold and a lower threshold of the linear power density under the reconstructed core linear power density distribution, i.e., the second preset range condition. When the linear power density of the detector at the corresponding measurement point does not meet the second preset range condition, it is determined that the circuit state of the detector does not meet the second preset range condition.

Optionally, mean linear power densities respectively corresponding to different numbers of detectors not in the failure state are approximately the same in value. Therefore, different mean linear power densities corresponding to different numbers of detectors not in the failure state may correspond to a same upper threshold and a same lower threshold. Alternatively, based on numerical differences between the different mean linear power densities, upper thresholds and lower thresholds corresponding to the different mean linear power densities are adjusted accordingly. For example, when a currently obtained mean linear power density differs excessively in value from a historically obtained mean linear power density, the upper threshold corresponding to the currently obtained mean linear power density is decreased, and the corresponding lower threshold is increased. Furthermore, the currently obtained mean linear power density may alternatively be numerically compared with a standard-specification mean linear power density.

The historically obtained mean linear power density refers to a set of different mean linear power densities recorded at historical moments. The standard-specification mean linear power density refers to a standard mean linear power density corresponding to the reactor under a normal operating status.

In this embodiment, a criterion for determining the linear power density is obtained according to the mean linear power density corresponding to the detectors not in the failure state, and then a criterion for determining the circuit state is obtained, thereby improving accuracy and efficiency of determining the circuit state of the detector.

In an exemplary embodiment, determining, based on the electrical signal of each detector at the corresponding measurement point, the circuit state corresponding to each detector includes step S1044.

In the step S1044, the second preset range condition is determined based on a power deviation value corresponding to a pair of detectors at centrally symmetric measurement points and not in the first failure state, and when a power value corresponding to a current detector does not satisfy the second preset range condition, it is determined that the circuit state of the current detector does not satisfy the second preset range condition.

Measurement points in the core are arranged in a centrally symmetric manner. When both the core and the detectors are in a normal operating state, a deviation value between power values respectively measured by a pair of detectors at centrally symmetric measurement points is within an allowable maximum deviation range. In an ideal operating state, the deviation value is zero.

Exemplarily, the second preset range condition is obtained according to the allowable maximum deviation range between the power values measured by a pair of detectors at centrally symmetric measurement points. For detectors that are not in the first failure state, power values measured by detectors corresponding to a pair of centrally symmetric measurement points are respectively obtained, and a deviation value corresponding to the pair of power values is obtained. When the deviation value does not meet the allowable maximum deviation range condition, it is determined that the circuit states of the current pair of detectors do not meet the second preset range condition. For detectors in the first failure state, the output signal of the detector is zero, so there is no need to determine whether a power value and a deviation value of the detector meet the second preset range condition.

In this embodiment, a criterion for determining the power deviation value is obtained according to the allowable maximum deviation range between power values measured by a pair of detectors at centrally symmetric measurement points, and then a criterion for determining the circuit state is obtained, thereby improving accuracy and efficiency of determining the circuit state of the detector.

In an exemplary embodiment, before the verification result for the circuit state corresponding to the candidate detector is obtained, step S108 is included.

In the step S108, an alarm signal corresponding to the candidate detector is triggered, and the verification result for the circuit state corresponding to the candidate detector is triggered based on the alarm signal.

The alarm signal refers to a warning signal issued in a monitoring system or a safety system to notify an operator that an abnormal situation occurs. The alarm signal may take a corresponding form according to an application scenario, such as sound, light, text, or communication.

Exemplarily, when the circuit state corresponding to the detector is determined not to meet the second preset range condition, the server triggers the alarm signal corresponding to the detector and sends the alarm signal to a terminal corresponding to the operator. The operator verifies a determination result for the detector to obtain a verification result, and then sends the verification result to the server through the terminal.

In this embodiment, by triggering the alarm signal, it is convenient to notify the operator to perform data verification, thereby reducing a possibility of data omission.

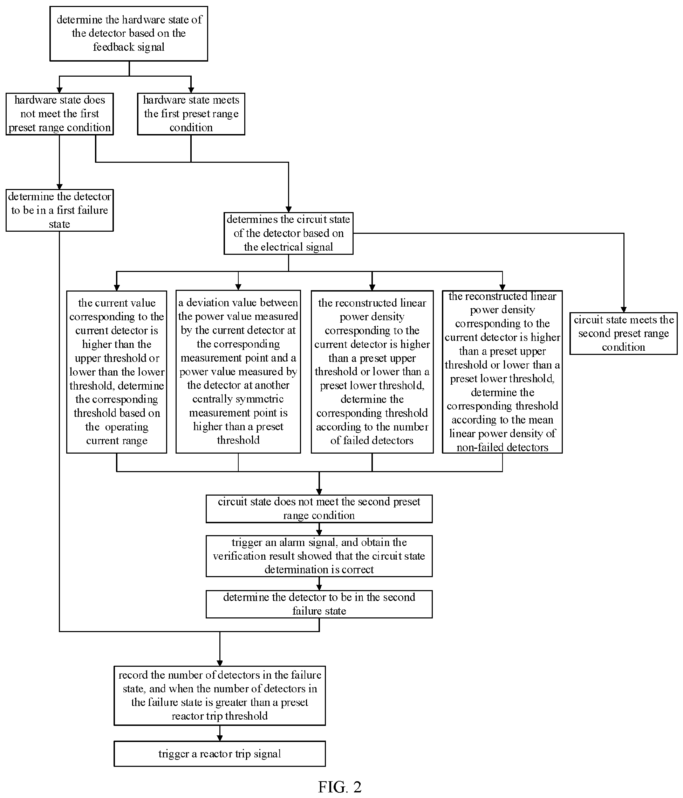

In an exemplary embodiment, as shown in FIG. 2, the server obtains the feedback signal of the detector, determines the hardware state of the detector based on the feedback signal, and determines the detector whose hardware state does not meet the first preset range condition to be in a first failure state. An upper threshold and a lower threshold of the first preset range condition may be determined based on the reference signal of the detector.

The server obtains the electrical signal of the detector and determines the circuit state of the detector based on the electrical signal. A determination method includes at least one of the following methods:

The first method is as follows: when the current value corresponding to the current detector is higher than the upper threshold or lower than the lower threshold, it is determined that the circuit state of the current detector does not meet the second preset range condition. The upper threshold and the lower threshold of the second preset range condition may be determined based on the operating current range.

The second method is as follows: when a deviation value between the power value measured by the current detector at the corresponding measurement point and a power value measured by the detector at another centrally symmetric measurement point is higher than a preset threshold, it is determined that the circuit state of the current detector does not meet the second preset range condition.

The third method is as follows: when the reconstructed linear power density corresponding to the current detector is higher than a preset upper threshold or lower than a preset lower threshold, it is determined that the circuit state of the current detector does not meet the second preset range condition. The corresponding threshold may be determined according to the number of failed detectors.

The fourth method is as follows: when the reconstructed linear power density corresponding to the current detector is higher than a preset upper threshold or lower than a preset lower threshold, it is determined that the circuit state of the current detector does not meet the second preset range condition. The corresponding threshold may be determined according to the mean linear power density of non-failed detectors.

The third method and the fourth method may be applied to detectors in the first failure state and detectors not in the first failure state. The first method and the second method may be applied only to detectors not in the first failure state.

When the circuit state of the detector is determined not to meet the second preset range condition, the server triggers an alarm signal and sends the alarm signal to the terminal corresponding to the operator. The operator verifies the determination result and sends the verification result to the server through the terminal. If it is determined based on the verification result that the circuit state of the detector does not meet the second preset range condition, the detector is determined to be in the second failure state.

The server records the number of detectors in the failure state, and when the number of detectors in the failure state is greater than a preset reactor trip threshold, a reactor trip signal is triggered.

It should be understood that, although the steps in the flowcharts involved in the above embodiments are shown in sequence as indicated by arrows, these steps are not necessarily executed sequentially in the order indicated by the arrows. Unless otherwise clearly specified herein, the steps are performed without any strict sequence limitation, and the steps may be performed in other orders. Moreover, at least some of the steps in the flowcharts involved in the above embodiments may include a plurality of steps or a plurality of stages. These steps or stages are not necessarily completed at the same moment, but may be executed at different moments. The order of execution of these steps or stages is not necessarily sequential, but may be performed in turn or alternately with other steps or with at least a portion of steps or stages of other steps.

Based on the same inventive concept, an embodiment of the present application further provides a fault detection apparatus for detectors for implementing the fault detection method for detectors as described above. The implementation solution to the problem provided by the apparatus is similar to the implementation solution described in the above method. Therefore, for the specific limitations in the one or more embodiments of the fault detection apparatus for detectors provided below, reference may be made to the limitations described above for the fault detection method for detectors. Details are not described herein again.

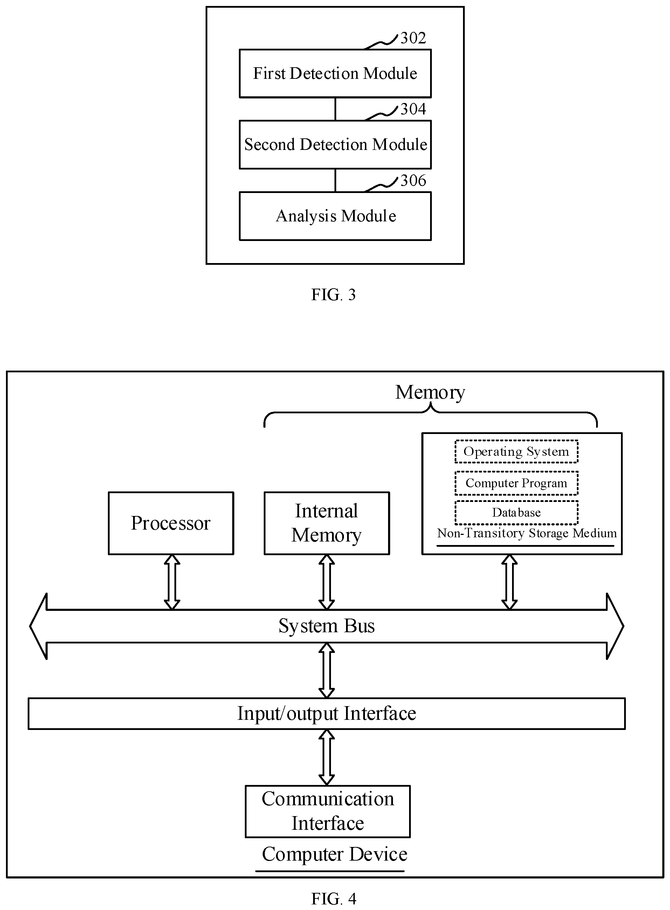

In an exemplary embodiment, as shown in FIG. 3, a fault detection apparatus for detectors is provided, including: a first detection module 302, a second detection module 304, and an analysis module 306.

The first detection module 302 is configured to determine, based on a feedback signal of each detector at a corresponding measurement point, a hardware state corresponding to each detector, and determine a detector whose hardware state does not satisfy a first preset range condition to be in a first failure state; wherein the hardware state represents a status of a hardware interface of the detector.

The second detection module 304 is configured to determine a circuit state corresponding to each detector based on an electrical signal of each detector at the corresponding measurement point, take a detector whose circuit state does not satisfy a second preset range condition as a candidate detector, obtain a verification result corresponding to the candidate detector, and when it is determined based on the verification result that the circuit state of the candidate detector does not satisfy the second preset range condition, determine the candidate detector to be in a second failure state; wherein the circuit state represents an operating status of an electronic circuit of the detector.

The analysis module 306 is configured to record a number of detectors in a target failure state, and trigger a reactor trip signal when the number of detectors in the target failure state is greater than a preset threshold; wherein the target failure state includes at least one of the first failure state or the second failure state.

In an exemplary embodiment, the first detection module 302 includes a hardware determination unit. The hardware determination unit is configured to: determine the first preset range condition based on a reference signal of the detector, and when the feedback signal of a current detector at the corresponding measurement point does not satisfy the first preset range condition, determine that the hardware state of the current detector does not satisfy the first preset range condition; wherein the reference signal refers to a signal when the detector is in a known normal hardware state.

In an exemplary embodiment, the second detection module 304 includes a first circuit determination unit. The first circuit determination unit is configured to: determine the second preset range condition based on an operating current range of the detector, and when a current value of a current detector not in the first failure state at the corresponding measurement point does not satisfy the second preset range condition, determine that the circuit state of the current detector does not satisfy the second preset range condition; wherein the operating current range refers to a current range of the detector when the detector is in a known normal circuit state.

In an exemplary embodiment, the second detection module 304 includes a second circuit determination unit. The second circuit determination unit is configured to: determine the second preset range condition based on a reconstructed core linear power density and the number of detectors currently in the target failure state, and when a linear power density of a current detector at the corresponding measurement point does not satisfy the second preset range condition, determine that the circuit state of the current detector does not satisfy the second preset range condition.

In an exemplary embodiment, the second detection module 304 includes a third circuit determination unit. The third circuit determination unit is configured to: determine the second preset range condition based on a reconstructed core linear power density and a mean linear power density corresponding to detectors that are currently not in the target failure state, and when a linear power value of a current detector at the corresponding measurement point does not satisfy the second preset range condition, determine that the circuit state of the current detector does not satisfy the second preset range condition.

In an exemplary embodiment, the second detection module 304 includes a fourth circuit determination unit. The fourth circuit determination unit is configured to: determine the second preset range condition based on a power deviation value corresponding to a pair of detectors at centrally symmetric measurement points and not in the first failure state, and when a power value corresponding to a current detector does not satisfy the second preset range condition, determine that the circuit state of the current detector does not satisfy the second preset range condition.

In an exemplary embodiment, the second detection module 304 includes an alarm unit. The alarm unit is configured to trigger an alarm signal corresponding to the candidate detector, and trigger the verification result for the circuit state corresponding to the candidate detector based on the alarm signal.

Each module in the above fault detection apparatus for detectors may be implemented wholly or partially by software, hardware, or a combination thereof. The above modules may be embedded in or independent of the processor in the computer device in the form of hardware, or may be stored in the memory of the computer device in the form of software, so that the processor can call and execute the operations corresponding to the above modules.

In an exemplary embodiment, a computer device is provided. The computer device may be a server, and a diagram of an internal structure thereof may be as shown in FIG. 4. The computer device includes a processor, a memory, an input/output interface (I/O), and a communication interface. The processor, the memory, and the I/O interface are connected through a system bus, and the communication interface is connected to the system bus through the I/O interface. The processor of the computer device is used to provide computing and control capabilities. The memory of the computer device includes a non-volatile storage medium and an internal memory. The non-volatile storage medium stores an operating system, a computer-readable instruction, and a database. The internal memory provides an environment for the operation of the operating system and the computer program in the non-volatile storage medium. The database of the computer device is used to store signal data of the detector. The I/O interface of the computer device is configured to exchange information between the processor and an external device. The communication interface of the computer device is configured to communicate with an external terminal via a network connection. The computer-readable instruction, when executed by the processor, implements a fault detection method for detectors.

Those skilled in the art may understand that the structure shown in FIG. 4 is merely a block diagram of part of the structure related to the solution of the present application, and does not constitute a limitation on the computer device to which the solution of the present application is applied. The specific computer device may include more or fewer components than those shown in the figure, or combine certain components, or have a different arrangement of components.

In an exemplary embodiment, a computer device is provided, including a memory and a processor. The memory stores computer-readable instructions. The processor, when executing the computer-readable instructions, implements the following steps:
determining, based on a feedback signal of each detector at a corresponding measurement point, a hardware state corresponding to each detector, and determining a detector whose hardware state does not satisfy a first preset range condition to be in a first failure state; wherein the hardware state represents a status of a hardware interface of the detector;
determining, based on an electrical signal of each detector at the corresponding measurement point, a circuit state corresponding to each detector, taking a detector whose circuit state does not satisfy a second preset range condition as a candidate detector, obtaining a verification result corresponding to the candidate detector, and when it is determined based on the verification result that the circuit state of the candidate detector does not satisfy the second preset range condition, determining the candidate detector to be in a second failure state; wherein the circuit state represents an operating status of an electronic circuit of the detector; and recording a number of detectors in a target failure state, and triggering a reactor trip signal when the number of detectors in the target failure state is greater than a preset threshold; wherein the target failure state includes at least one of the first failure state or the second failure state.

In an embodiment, the processor, when executing the computer-readable instructions, further implements the following steps: determining the first preset range condition based on a reference signal of the detector, and when the feedback signal of a current detector at the corresponding measurement point does not satisfy the first preset range condition, determining that the hardware state of the current detector does not satisfy the first preset range condition; wherein the reference signal refers to a signal when the detector is in a known normal hardware state.

In an embodiment, the processor, when executing the computer-readable instructions, further implements the following steps: determining the second preset range condition based on an operating current range of the detector, and when a current value of a current detector not in the first failure state at the corresponding measurement point does not satisfy the second preset range condition, determining that the circuit state of the current detector does not satisfy the second preset range condition; wherein the operating current range refers to a current range of the detector when the detector is in a known normal circuit state.

In an embodiment, the processor, when executing the computer-readable instructions, further implements the following steps: determining the second preset range condition based on a reconstructed core linear power density and the number of detectors currently in the target failure state, and when a linear power density of a current detector at the corresponding measurement point does not satisfy the second preset range condition, determining that the circuit state of the current detector does not satisfy the second preset range condition.

In an embodiment, the processor, when executing the computer-readable instructions, further implements the following steps: determining the second preset range condition based on a reconstructed core linear power density and a mean linear power density corresponding to detectors that are currently not in the target failure state, and when a linear power value of a current detector at the corresponding measurement point does not satisfy the second preset range condition, determining that the circuit state of the current detector does not satisfy the second preset range condition.

In an embodiment, the processor, when executing the computer-readable instructions, further implements the following steps: determining the second preset range condition based on a power deviation value corresponding to a pair of detectors at centrally symmetric measurement points and not in the first failure state, and when a power value corresponding to a current detector does not satisfy the second preset range condition, determining that the circuit state of the current detector does not satisfy the second preset range condition.

In an embodiment, the processor, when executing the computer-readable instructions, further implements the following steps: triggering an alarm signal corresponding to the candidate detector, and triggering the verification result for the circuit state corresponding to the candidate detector based on the alarm signal.

In an embodiment, a computer-readable storage medium is provided, having computer-readable instructions stored therein. The computer-readable instructions, when executed by a processor, implement the following steps:
determining, based on a feedback signal of each detector at a corresponding measurement point, a hardware state corresponding to each detector, and determining a detector whose hardware state does not satisfy a first preset range condition to be in a first failure state; wherein the hardware state represents a status of a hardware interface of the detector;
determining, based on an electrical signal of each detector at the corresponding measurement point, a circuit state corresponding to each detector, taking a detector whose circuit state does not satisfy a second preset range condition as a candidate detector, obtaining a verification result corresponding to the candidate detector, and when it is determined based on the verification result that the circuit state of the candidate detector does not satisfy the second preset range condition, determining the candidate detector to be in a second failure state; wherein the circuit state represents an operating status of an electronic circuit of the detector; and recording a number of detectors in a target failure state, and triggering a reactor trip signal when the number of detectors in the target failure state is greater than a preset threshold; wherein the target failure state includes at least one of the first failure state or the second failure state.

In an embodiment, the computer-readable instructions, when executed by a processor, further implement the following steps: determining the first preset range condition based on a reference signal of the detector, and when the feedback signal of a current detector at the corresponding measurement point does not satisfy the first preset range condition, determining that the hardware state of the current detector does not satisfy the first preset range condition; wherein the reference signal refers to a signal when the detector is in a known normal hardware state.

In an embodiment, the computer-readable instructions, when executed by a processor, further implement the following steps: determining the second preset range condition based on an operating current range of the detector, and when a current value of a current detector not in the first failure state at the corresponding measurement point does not satisfy the second preset range condition, determining that the circuit state of the current detector does not satisfy the second preset range condition; wherein the operating current range refers to a current range of the detector when the detector is in a known normal circuit state.

In an embodiment, the computer-readable instructions, when executed by a processor, further implement the following steps: determining the second preset range condition based on a reconstructed core linear power density and the number of detectors currently in the target failure state, and when a linear power density of a current detector at the corresponding measurement point does not satisfy the second preset range condition, determining that the circuit state of the current detector does not satisfy the second preset range condition.

In an embodiment, the computer-readable instructions, when executed by a processor, further implement the following steps: determining the second preset range condition based on a reconstructed core linear power density and a mean linear power density corresponding to detectors that are currently not in the target failure state, and when a linear power value of a current detector at the corresponding measurement point does not satisfy the second preset range condition, determining that the circuit state of the current detector does not satisfy the second preset range condition.

In an embodiment, the computer-readable instructions, when executed by a processor, further implement the following steps: determining the second preset range condition based on a power deviation value corresponding to a pair of detectors at centrally symmetric measurement points and not in the first failure state, and when a power value corresponding to a current detector does not satisfy the second preset range condition, determining that the circuit state of the current detector does not satisfy the second preset range condition.

In an embodiment, the computer-readable instructions, when executed by a processor, further implement the following steps: triggering an alarm signal corresponding to the candidate detector, and triggering the verification result for the circuit state corresponding to the candidate detector based on the alarm signal.

Those of ordinary skill in the art may understand that all or part of the processes in the methods of the above embodiments may be implemented by instructing relevant hardware through computer-readable instructions. The computer-readable instructions may be stored in a non-volatile computer-readable storage medium. When executed, the computer-readable instructions may include the processes of the above method embodiments. Any reference to the memory, storage, database, or other media used in the embodiments provided in the present application may include at least one of a non-volatile memory or a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase-change memory (PCM), a graphene memory, and the like. The volatile memory may include a random access memory (RAM) or an external cache memory, and the like. By way of illustration and not limitation, the RAM may be in various forms, such as a static random access memory (SRAM) or a dynamic random access memory (DRAM). The databases involved in the various embodiments provided in the present application may include at least one of a relational database or a non-relational database. The non-relational database may include a blockchain-based distributed database and the like, but is not limited thereto. The processor involved in the various embodiments provided in the present application may be a general-purpose processor, a central processing unit, a graphics processing unit, a digital signal processor, a programmable logic device, a data processing logic unit based on quantum computing, or the like, but is not limited thereto.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present application, and their description is specific and detailed, but cannot therefore be understood as a limitation on the patent scope of the present application. It should be noted that those of ordinary skill in the art may further make variations and improvements without departing from the conception of the present application, and these all fall within the protection scope of the present application. Therefore, the protection scope of the present application should be subject to the appended claims.

## Claims

1. A fault detection method for detectors, the method comprising:
determining, based on a feedback signal of each detector at a corresponding measurement point, a hardware state corresponding to each detector, and determining a detector whose hardware state does not satisfy a first preset range condition to be in a first failure state; wherein the hardware state represents a status of a hardware interface of the detector;
determining, based on an electrical signal of each detector at the corresponding measurement point, a circuit state corresponding to each detector, taking a detector whose circuit state does not satisfy a second preset range condition as a candidate detector, obtaining a verification result corresponding to the candidate detector, and when it is determined based on the verification result that the circuit state of the candidate detector does not satisfy the second preset range condition, determining the candidate detector to be in a second failure state; wherein the circuit state represents an operating status of an electronic circuit of the detector; and
recording a number of detectors in a target failure state, and triggering a reactor trip signal when the number of detectors in the target failure state is greater than a preset threshold; wherein the target failure state comprises at least one of the first failure state or the second failure state.

2. The method according to claim 1, wherein determining, based on the feedback signal of each detector at the corresponding measurement point, the hardware state corresponding to each detector comprises:
determining the first preset range condition based on a reference signal of the detector, and when the feedback signal of a current detector at the corresponding measurement point does not satisfy the first preset range condition, determining that the hardware state of the current detector does not satisfy the first preset range condition; wherein the reference signal refers to a signal when the detector is in a known normal hardware state.

3. The method according to claim 1, wherein determining, based on the electrical signal of each detector at the corresponding measurement point, the circuit state corresponding to each detector comprises:
determining the second preset range condition based on an operating current range of the detector, and when a current value of a current detector not in the first failure state at the corresponding measurement point does not satisfy the second preset range condition, determining that the circuit state of the current detector does not satisfy the second preset range condition; wherein the operating current range refers to a current range of the detector when the detector is in a known normal circuit state.

4. The method according to claim 1, wherein determining, based on the electrical signal of each detector at the corresponding measurement point, the circuit state corresponding to each detector comprises:
determining the second preset range condition based on a reconstructed core linear power density and the number of detectors currently in the target failure state, and when a linear power density of a current detector at the corresponding measurement point does not satisfy the second preset range condition, determining that the circuit state of the current detector does not satisfy the second preset range condition.

5. The method according to claim 1, wherein determining, based on the electrical signal of each detector at the corresponding measurement point, the circuit state corresponding to each detector comprises:
determining the second preset range condition based on a reconstructed core linear power density and a mean linear power density corresponding to detectors that are currently not in the target failure state, and when a linear power value of a current detector at the corresponding measurement point does not satisfy the second preset range condition, determining that the circuit state of the current detector does not satisfy the second preset range condition.

6. The method according to claim 1, wherein determining, based on the electrical signal of each detector at the corresponding measurement point, the circuit state corresponding to each detector comprises:
determining the second preset range condition based on a power deviation value corresponding to a pair of detectors at centrally symmetric measurement points and not in the first failure state, and when a power value corresponding to a current detector does not satisfy the second preset range condition, determining that the circuit state of the current detector does not satisfy the second preset range condition.

7. The method according to claim 1, before obtaining the verification result for the circuit state corresponding to the candidate detector, the method comprising:
triggering an alarm signal corresponding to the candidate detector, and triggering, based on the alarm signal, the verification result for the circuit state corresponding to the candidate detector.

8. A fault detection apparatus for detectors, the apparatus comprising:
a first detection module, configured to determine, based on a feedback signal of each detector at a corresponding measurement point, a hardware state corresponding to each detector, and determine a detector whose hardware state does not satisfy a first preset range condition to be in a first failure state; wherein the hardware state represents a status of a hardware interface of the detector;
a second detection module, configured to determine, based on an electrical signal of each detector at the corresponding measurement point, a circuit state corresponding to each detector, take a detector whose circuit state does not satisfy a second preset range condition as a candidate detector, obtain a verification result corresponding to the candidate detector, and when it is determined based on the verification result that the circuit state of the candidate detector does not satisfy the second preset range condition, determine the candidate detector to be in a second failure state; wherein the circuit state represents an operating status of an electronic circuit of the detector; and
an analysis module, configured to record a number of detectors in a target failure state, and trigger a reactor trip signal when the number of detectors in the target failure state is greater than a preset threshold; wherein the target failure state comprises at least one of the first failure state or the second failure state.

9. The apparatus according to claim 8, wherein the first detection module comprises a hardware determination unit, the hardware determination unit being configured to:
determine the first preset range condition based on a reference signal of the detector, and when the feedback signal of a current detector at the corresponding measurement point does not satisfy the first preset range condition, determine that the hardware state of the current detector does not satisfy the first preset range condition; wherein the reference signal refers to a signal when the detector is in a known normal hardware state.

10. The apparatus according to claim 8, wherein the second detection module comprises a first circuit determination unit, the first circuit determination unit being configured to:
determine the second preset range condition based on an operating current range of the detector, and when a current value of a current detector not in the first failure state at the corresponding measurement point does not satisfy the second preset range condition, determine that the circuit state of the current detector does not satisfy the second preset range condition; wherein the operating current range refers to a current range of the detector when the detector is in a known normal circuit state.

11. The apparatus according to claim 8, wherein the second detection module comprises a second circuit determination unit, the second circuit determination unit being configured to:
determine the second preset range condition based on a reconstructed core linear power density and the number of detectors currently in the target failure state, and when a linear power density of a current detector at the corresponding measurement point does not satisfy the second preset range condition, determine that the circuit state of the current detector does not satisfy the second preset range condition.

12. The apparatus according to claim 8, wherein the second detection module comprises a third circuit determination unit, the third circuit determination unit being configured to:
determine the second preset range condition based on a reconstructed core linear power density and a mean linear power density corresponding to detectors that are currently not in the target failure state, and when a linear power value of a current detector at the corresponding measurement point does not satisfy the second preset range condition, determine that the circuit state of the current detector does not satisfy the second preset range condition.

13. The apparatus according to claim 8, wherein the second detection module comprises a fourth circuit determination unit, the fourth circuit determination unit being configured to:
determine the second preset range condition based on a power deviation value corresponding to a pair of detectors at centrally symmetric measurement points and not in the first failure state, and when a power value corresponding to a current detector does not satisfy the second preset range condition, determine that the circuit state of the current detector does not satisfy the second preset range condition.

14. A computer device, comprising a memory and a processor, the memory storing computer-readable instructions, wherein the processor, when executing the computer-readable instructions, implements the steps of the method according to any one of claims 1 to 7.

15. A computer-readable storage medium, having computer-readable instructions stored therein, wherein the computer-readable instructions, when executed by a processor, implement the steps of the method according to any one of claims 1 to 7.
